# EUROPEAN PATENT SPECIFICATION

(11) **EP 4 338 985 B1**
(45) Date of publication and mention of the grant of the patent: **06.05.2026**
(21) Application number: 22195779.8
(22) Date of filing: 15.09.2022
(51) Int. Cl.: B60D 1/52, B60D 1/26, B60D 1/06

(54) **TRAILER COUPLING FOR VEHICLES**
ANHÄNGEKUPPLUNG FÜR FAHRZEUGE
ATTELAGE DE REMORQUE POUR VÉHICULES

(43) Date of publication of application: 20.03.2024
(73) Proprietor: Bosal Flanders NV, 3560 Lummen (BE)
(72) Inventor: MASSA, Jorith, 3570 Alken (BE); BALINT, Peter, 71134 Aidlingen (DE); VERREYDT, Jonathan, 3440 Zoutleeuw (BE)
(74) Representative: Bohest AG

(56) References cited:
- EP-A1- 0 934 838
- EP-A1- 1 757 466
- EP-A2- 0 455 251
- DE-C1- 4 009 530
- GB-A- 2 523 836
- US-A- 5 626 435

## Description

The invention relates to a trailer coupling for vehicles, in particular motor vehicles such as, for example, passenger cars.

To attach or release a trailer coupling from a corresponding mounting structure on a vehicle, the coupling is often operated using a handwheel. For safety reasons, such a handwheel may be a removable part and/or can be rotated only while keeping the wheel pushed or pulled. Such handwheels may get lost, need high forces to be operated, or require unintuitive movements to be operated. This lowers a user friendliness also considering the often greasy or dirty environment of trailer coupling applications.

EP-A-1 757 466 A1 discloses a trailer coupling for vehicles with a coupling arm having a coupling head arranged at a free end thereof, and that has an end opposite to the free end that is attachable to a mounting structure. The trailer coupling further comprises a geared locking mechanism including an actuator lever of fixed length which is rotatable about an axle between a locking position in which the trailer coupling is locked to the mounting structure, and a release position in which the trailer coupling may be removed from the mounting structure. EP 0 934 838 A1 discloses a trailer coupling known in the prior art.

EP-A- 0 455 251 A2 and DE 40 09 530 C1 disclose trailer couplings for vehicles. These trailer couplings comprise a locking mechanism including an extendable lever.

US 5,626,435 discloses a trailer coupling according to the preamble of claim 1.

Therefore, there is a need for a trailer coupling with a user-friendly user interface. In particular, there is need for a trailer coupling providing an intuitive operation of the trailer coupling including safety features to prevent inadvertent actuation of the trailer coupling.

According to the invention, there is provided a trailer coupling for motor vehicles, for example passenger vehicles. The trailer coupling comprises a coupling arm with a coupling head arranged at a free end of the coupling arm for coupling a trailer to the vehicle via the trailer coupling. The coupling head may, for example, be a coupling ball to be inserted in a corresponding ball receiving cavity in a trailer. An opposite end of the coupling arm is attachable, for example insertable, to a mounting structure, which mounting structure is arrangeable at the vehicle. Preferably, the mounting structure is a rigid structure, which is preferably fixedly arrangeable at the vehicle, for example, at a cross bar. The trailer coupling further comprises a locking mechanism comprising a locking arrangement for releasably locking the coupling arm to the mounting structure. Thereby, the trailer coupling may reversibly be locked to the vehicle. A locking arrangement may, for example, comprise movable locking elements that are moveable from an engaged to a released position, thereby preventing or allowing a disengagement of the trailer coupling from a mounting structure provided at the vehicle. The trailer coupling according to the invention further comprises a user interface for actuating the locking mechanism, wherein the user interface comprises an extendable lever. The user interface is a handwheel accommodating the extendable lever.

A handwheel provided with an extendable lever allows for an intuitive approach of operating the handwheel and thus the trailer coupling. In addition, an extendable lever in an extended position provides lower force needed for a same torque to be applied, for example, to a handwheel. In a non-extended position of the extendable lever, the lever is accommodated in a main body of the handwheel: By this, the extendable lever may be safely stored, less prone to damage or soiling and simple in design.

In addition, the presence of an extendable lever enables the provision of safety measures that prevent actuation of the locking mechanism at a very early stage of operation of the trailer coupling. In particular, blocking or locking means may be provided, which keep the extendable lever in the non-extended position or that inhibit or hinder a movement of the handwheel, when the extendable lever is in the non-extended position. Preferably, such blocking means for blocking a movement of the handwheel are provided to block the lever in the non-extended position only.

In a non-extended position, the extendable lever may be arranged in the main body of the handwheel such as to not extend over a lateral dimension of the main body of the handwheel. For example, the extendable lever may be arranged such as to not extend over a circumference of a circular main body of the handwheel or such to leave clearance with surrounding coupling components.

In a non-extended position, the extendable lever may be arranged in the main body such as to slightly extend over a lateral dimension of the main body of the handwheel. A protruding portion of the non-extended lever may, for example, form a grip for the extendable lever for easier extending of the lever.

If the extendable lever extends over a lateral dimension of the main body of the handwheel in the non-extended position, then preferably the extendable lever extends over the lateral dimension of the main body by less than 50 percent of a body dimension in said extending direction. For example, the extendable lever does not extend more than 50 percent laterally over a circumference of a circular main body when in a non-extended position. Preferably, in a non-extended position, the extendable lever extends less than 40 percent, for example between 10 percent and 30 percent over a lateral dimension of the main body in said lateral direction when in a non-extended position.

In an extended position, the extendable lever considerably extends over a dimension of a main body of the handwheel. Preferably, the extendable lever in the extended position, extends considerably over the lateral dimension of the main body, thereby providing a leverage to apply torque to the main body of the handwheel to actuate a locking mechanism. Preferably, in an extended position, the extendable lever extends at least 50 percent over a dimension of the main body, more preferably between 60 percent and up to 100 percent over a dimension of the main body, thus for example doubling a lateral dimension of a main body.

Preferably, the extendable lever is a foldable lever or a slidable lever. Thus, preferably, the extendable lever is arranged in a main body of the handwheel such as to be unfoldable or slidable from or in a main body. A foldable lever in an unfolded position and a slidable lever in an unshifted position may be accommodated in the main body.

A lever geometry is preferably simple. An extendable lever may, for example, be elongate and straight or bent.

Such arrangements and shapes of extendable levers are easy to manufacture, to handle by single rotational or linear movement, and provide a safe housing for the levers in non-extended positions.

The extendable levers may comprise a return device for holding or forcing the extendable lever in or to a non-extended position. This may, for example, be an energy storing device, such as for example a spring, such as a coil spring or leaf spring. The provision of a return device may prevent that a lever is unintentionally left in its extended position, thereby allowing to operate the handwheel and actuate the locking mechanism and unlocking the trailer coupling.

As the user interface is a handwheel and the extendable lever is accommodated in the handwheel, the lever serves to apply torque to the handwheel, while rotation of the handwheel actuates the locking mechanism.

The handwheel may comprise a security lock to secure the handwheel in a locked position. The security lock may prevent at least one of a movement of the extendable lever, movement of the handwheel, movement of parts of the locking mechanism, in particular a movement of a locking arrangement, or a movement of parts of an actuation mechanism for the locking mechanism. The security lock may prevent some or all of the above-mentioned movements of parts of the trailer coupling.

The security lock may be embodied, for example, as a linearly movable lock or as a rotatable lock.

A security lock may be integrated in the handwheel.

A security lock may be embodied as key and lock.

The trailer coupling may comprise an end stop for the extendable lever, hindering or preventing a movement of the handwheel.

An end stop may be provided at the handwheel or external to the handwheel or both, at the handwheel and external to the handwheel. If the handwheel is provided with end stop, then preferably, the end stop is provided at the extendable lever.

Preferably, an end stop is not part of the handwheel. Preferably, an end stop is arranged external to the handwheel, for example, provided on a part of the trailer coupling not being part of the handwheel.

An end stop may be provided for the extendable lever in the non-extended position or in the extended position, or in both positions. Preferably, the end stop is provided for the extendable lever in the non-extended position, more preferably in the non-extended position only. An end stop may, for example, prevent a rotational movement of the handhweel.

An end stop may, for example, be a protrusion or latch.

An end stop may be integrated in or form part of other functional elements of the trailer coupling. For example, an end stop may be combined with or integrated in coupling elements for parts of the trailer coupling.

A shape of an end stop may be chosen according to a user's need and intended functions of the end stop. If an end stop is or comprises a protrusion, the protrusion may, for example, be a cylinder, a prism, a bar, a square or a polygon. If an end stop is provided as or comprises a protrusion also serving as coupling element for parts of the trailer coupling, then the end stop preferably has a non-circular shape.

Preferably, the end stop comprises a protrusion external of the handwheel.

Preferably, an end stop is arranged is arranged adjacent the handwheel.

Preferably, the end stop is arranged such that the extendable lever in the extended position may bypass the end stop and thereby allow the handwheel to move and actuate the locking mechanism.

The end stop may be arranged such that a movement of the handwheel is limited also when the extendable lever is in the extended position. This may prevent, for example, that the handwheel may be removed or fall off, and loss of the handwheel may be prevented. For example, the extendable lever may bypass the end-stop when brought into the extended position to allow the handwheel to rotate. The end stop may be positioned such that after, for example, a full rotation of the handwheel, the lever in the extended position abuts the end stop and thereby prevents further rotation of the handwheel.

Preferably, a minimal rotation of the handwheel must occur in order for a locking mechanism to be actuated. For example, the handwheel must be rotated preferably at least a quarter of a full rotation such that a locking mechanism is actuated, more preferably, at least half of a full rotation.

Actuation of a locking mechanism of the trailer coupling by the handwheel may be embodied by various means known in the art. Preferably, the actuation mechanism comprises a rack and pinion drive that acts on a locking arrangement.

Locking mechanisms for trailer couplings are well known in the art and may basically be used in the trailer coupling according to the invention. As an example only, in the European patent application EP 1 829 716, a locking mechanism with a locking arrangement comprising movable balls to be brought into and released from engagement with corresponding cavities is described. In EP 1 829 716, also an example of a mounting structure is described that may be provided in the trailer coupling of the present invention. The mounting structure of EP 1 829 716 comprises a holder fixedly mountable to a vehicle. The holder comprises coupling recesses at its lower end, while one end of the coupling arm in the form of a coupling tower comprises corresponding coupling protrusions. The coupling tower is mounted to the holder thereby locking the coupling arm in the locking arrangement and inserting the coupling protrusions into the coupling recesses constituting a form fit.

Other locking mechanisms, for example using locking pins or locking clamps, such as for example described in DE 35 41 904 may also be used in the trailer coupling according to the present invention.

According to the invention, there is also provided a method for operating a trailer coupling according to the present invention and as described herein. The method comprises: providing a trailer coupling comprising a mounting structure attachable to a motor vehicle and comprising a user interface comprising an extendable lever, wherein the user interface is a handwheel accommodating the extendable lever; extending the extendable lever to an extended position; moving the handwheel by acting on the extendable lever in the extended position, thereby releasing a locking mechanism locking one end of a coupling arm of the trailer coupling, which end is coupled to the mounting structure, thereby allowing the coupling arm to be detached from the mounting structure.

The method may further comprise extending the extendable lever by a rotational movement or by a linear movement, or by a combination of a rotational and a linear movement.

Preferably, the method further comprises blocking a movement of the handwheel by providing an end stop for the extendable lever in a non-extended position.

Preferably, the method further comprises extending the extendable lever to the extended position thereby bypassing the end stop and allowing movement of the handwheel. The movement of the handwheel actuates the locking mechanism and moves a locking arrangement of the locking mechanism from a locking to an unlocking state.

The method may further comprise providing a force acting on the extendable lever in the extended position to force the extendable lever back into a non-extended position.

Further elements, their function and advantages have been described relating to the trailer coupling.

The invention is further described with regard to embodiments, which are illustrated by means of the following drawings, wherein:
- Fig. 1: shows a trailer coupling attached to a cross member of a vehicle;
- Fig. 2: shows a trailer coupling with return device for the extendable lever;
- Fig. 3: shows a trailer coupling with extendable lever in the extended position;
- Fig. 4: is a partial cross-sectional view of an example of an actuation mechanism for a locking mechanism of a trailer coupling;
- Fig. 5: shows a partial exploded view of a trailer coupling.

In the drawings, the same reference signs are used for the same or similar elements.

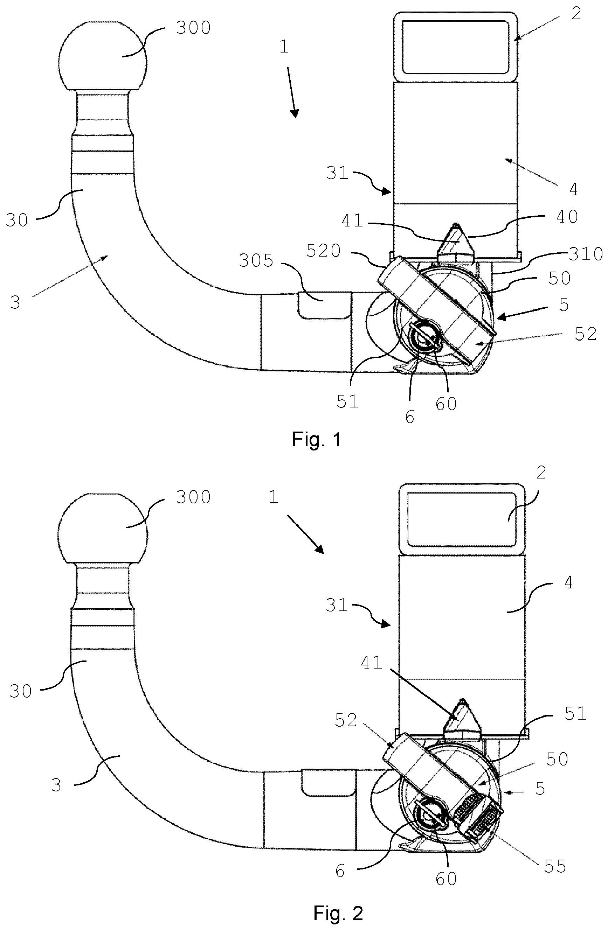

**Fig. 1** shows a trailer coupling 1 attached to a cross member 2 of a vehicle, for example, to a cross bar of a passenger car.

The trailer coupling 1 comprises a coupling arm 3 with a free end 30 and an opposite locking end 31.

The free end 30 of the coupling arm 3 forms a towing ball carrier with a head piece 300 shaped as towing ball. The head piece 300 is provided for releasably coupling a trailer.

The locking end 31 of the coupling arm 3 has the form of a plug tower 310 plugged into and accommodated in the housing 4. The housing 4 is a rigid mounting structure fixedly attached to the cross bar 2. The housing 4 and the locking end 31 of the coupling arm 3 comprise an interacting locking mechanism (not shown) releasably locking the trailer coupling 1 to the vehicle.

A user interface 5 is a handwheel 50 provided at the trailer coupling 1 for operating the trailer coupling 1 and actuating the locking mechanism. By operating the handwheel 50, a locking arrangement (not shown) is released, thereby releasing the locking end 31 of the coupling arm 3 from the housing 4 in order to release the trailer coupling 1.

The locking mechanism and locking arrangements of a locking ends of a trailer coupling 1, in particular in the form of a plug tower 310 may be embodied as known in the art. Examples of locking mechanisms using releasable locking balls are described in DE 100 32 002 A1 or EP 1 829 716 A1.

The rotatable handwheel 50 comprises a main body 51 and a foldable lever 52 arranged on the top of the main body 51. The main body 51 has a tubular shape with a closed top. The foldable lever 52 is connected with the main body 51 at a lateral side of the top of the main body 51. The foldable lever 52 in the unfolded position projects radially over the circumference of the main body 51 with the free end 520 of the lever 52. The projecting free end 520 enables to grip the lever 52 for unfolding the lever and allows for security means as described further below.

The user interface 5 (handwheel 50) comprises a security lock 6 with a key 60 to operate the security lock 6. The security lock 6 preferably prohibits either an unfolding of the lever 52 or a rotational movement of the handwheel 50. The security lock 6 may prohibit both, the unfolding of the lever 52 and the rotation of the handwheel 50. The security lock 6 may also act on elements of an actuation mechanism for the locking mechanism, for example on a gear or similar elements provided inside the coupling arm 3.

At a lower end of the plug tower 310 two protrusions 41 are arranged at opposite sides of the plug tower 310 (only one visible). In Fig. 1, the protrusions 41 have the shape of a prism.

The housing 4 comprises oppositely arranged recesses 40 having a triangular shape. The recesses 40 are arranged at a bottom end of the housing 4 (one recess visible only). The form of the recess 40 corresponds to the form of the protrusions 41. The plug tower 310 is inserted into the housing 4 until the recesses 40 and the protrusions 41 abut each other. In this position, a rotation of the coupling arm 3 relative to the longitudinal axis of the housing 4 is prevented by the interlocking recesses 40 and protrusions 41. With protrusions 41 and recesses 40 embodied as shown in Fig.1, the plug tower 310 may be inserted into the housing 4 in a straight linear movement parallel to the longitudinal axis of the housing 4.

In Fig. 1, the foldable lever 52 is shown in its unfolded position and the trailer coupling 1 in a locked state. If the security lock 6 is released, the lever 52 may be unfolded and the handwheel 50 may be rotated in clockwise direction. Sufficient rotation of the handwheel 50 actuates a locking mechanism to release same from a locked state such that the trailer coupling 1 may be released from the housing 4. Even if no security lock 6 is present, the protrusion 41 prevents rotation of the handwheel 50 as the lever 52 in the unfolded position abuts the protrusion 41 with its protruding free end 520. The protrusion 41 thus forms an end stop for the free end 520 of the extendable lever 52 in the unfolded position, which free end 520 projects laterally from the circumference of the main body 51 of the handwheel 50. Thus, even if the handwheel 50 were rotated to some extent with the unfolded lever 52, unintentional or willingly, a locking mechanism will not be actuated since the handwheel 50 may not fully be rotated. Preferably, lever 52 and protrusion 41 are positioned such that only little rotation of the handwheel 50 is possible when the lever is in the folded position. Preferably, a maximum rotation of the handwheel 50 of a quarter of a rotation, preferably even less of a rotation is admitted, with a lever in an unfolded position, and without overcoming security means (security lock 6, protrusion 41).

A label 305 may be provided at the coupling arm 3, for example, provided with operation or safety instructions.

**Fig. 2** shows a trailer coupling 1 similar to that of Fig. 1. The user interface 5 (handwheel 50) comprises a foldable lever 52 mounted to the main body 51 of the handwheel 50. The lever 52 comprises a return device 55 embodied as elastic energy storing device, for example as a spring. The return device 55 exerts a force onto the lever 52, when the lever is unfolded. The force is maximal when the foldable lever 52 is in the unfolded position. The return device 55 forces the lever 52 into its unfolded position.

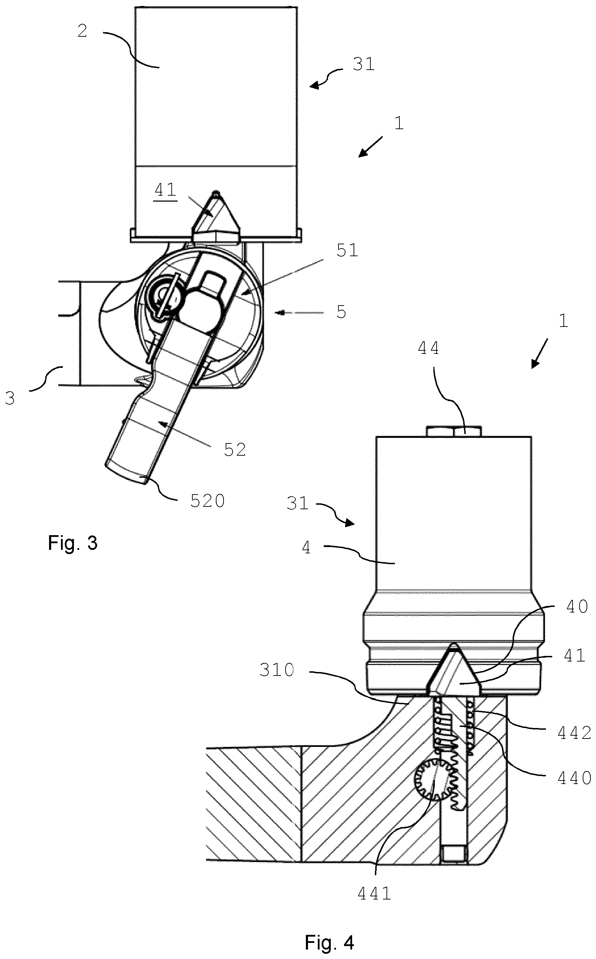

**Fig. 3** shows an excerpt of a trailer coupling 1, for example a trailer coupling as shown in Fig. 1 or Fig. 2, with the extendable lever 52 in the extended position. The lever 52 in the extended position provides high leverage to loosen and rotate the handwheel 50, even if the handwheel 50 should be stuck due to dirty conditions.

As may be seen in Fig. 3, due to the unfolding of the lever 52, the projecting free end 520 of the lever 52 is moved to the opposite side of the main body 51 of the handwheel 50. By this, the protrusion 41 may be bypassed when rotating the handwheel 50 and the locking mechanism may be actuated.

**Fig. 4** is a partial cross-sectional view of a part of a trailer coupling. In Fig. 4, an example of an actuation mechanism for a locking mechanism for the trailer coupling is shown, as it may be embodied in the trailer coupling according to the invention.

A pinion gear 441 and gear rack 440 are arranged in the plug tower 310. The gear rack 440 forms a lower end of a plunger movably arranged within the plug tower 310. An opposite upper end of the plunger is part of the locking mechanism. Typically, an upward movement of the plunger 44 brings the trailer coupling 1 into the locking position of the trailer coupling 1.

The locking mechanism is arranged in the coupling arm 3, which is inserted in the housing 4. Screw 44 closes off the top end of the plug tower 310.

Pinion gear 441 and gear rack 440 are part of the actuation mechanism for the locking mechanism arranged at the upper end of the plug tower 310. A coil spring 442 is provided around parts of the plunger 44 above the gear rack 440 to act on the plunger 44 and keep it in the locked position.

Via rotation of the handwheel 50, the pinion gear 441 that is coupled to the handwheel 50, is rotated in the same direction as the handwheel 50. The pinion gear 441 engages the gear rack 440. Via linear downward movement of the gear rack inside the plug tower 310 the locking arrangement is released and the plug tower 310 may be unplugged from the housing 4.

Similar actuation and locking mechanisms are described in EP 1 829 716. For further details, in particular with reference to an embodiment of a locking mechanism, reference is made to this document.

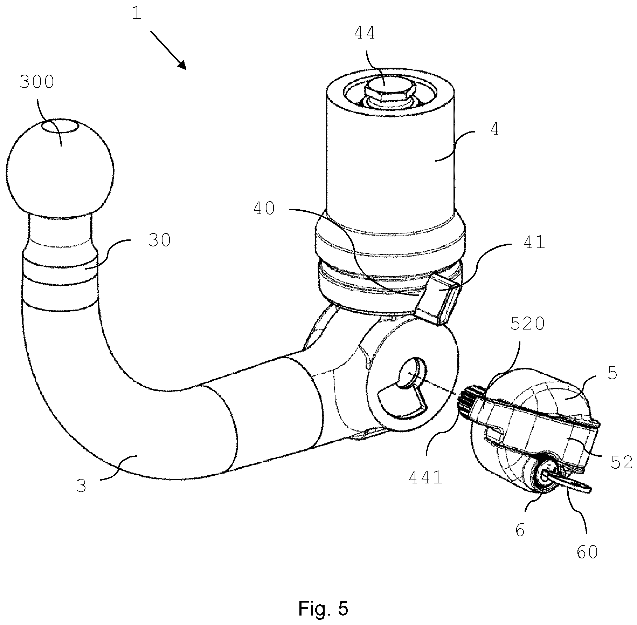

In the partial exploded view of the trailer coupling 1 of **Fig. 5** features of the trailer coupling 1, in particular the coupling of the handwheel 50 with coupling arm 3 is shown.

Again, the same or similar elements are provided with the same or similar reference signs.

Shown is the coupling arm 3 with its free end 30 bearing the coupling head piece 300 and the plug tower 310 (not seen in Fig. 5) at the coupling arm's locking end 31 inserted and locked in the housing 4.

The plug tower 310 is inserted from below into the housing 4, whereby a locking mechanism is brought into the locked state.

In addition, the two oppositely arranged protrusions 41 arranged at the lower end of the plug tower 310 engage with the two recesses 40 arranged at the lower rim of the housing 4. In the embodiment of Fig. 5 of the trailer coupling 1, the protrusions 41 have the shape of two rectangular bars protruding radially from the plug tower 310. The recesses 40 are accordingly shaped as rectangular slits. Protrusions 41 and slits 41 are not arranged parallel to the longitudinal axis of the plug tower 310. A length direction of the slits is arranged at a small angle, for example between 3 degree and 45 degree, to the longitudinal axis of the plug tower 310.

With protrusions 41 and recesses 40 being in abutment, the coupling arm 3 is prevented from rotating around a longitudinal plug tower axis when in the locked position.

The user interface 5 (handwheel 50) is provided at the coupling arm 3 below one of the protrusions 41 and parallel to the longitudinal axis of the plug tower 310.

The handwheel 50 is provided with smooth outer circumference and foldable lever 52 in the unfolded position. The lever 52 in the unfolded position may not pass the protrusion 41, even if the handwheel 50 were rotated in clockwise direction.

The user interface 5 (handwheel 50) additionally comprises a security lock 6 arranged in the handwheel 50. The security lock 6 is lockable and unlockable with a key 60. The security lock 6 preferably acts on the pinion drive 441 arranged along the rotational axis of the handwheel 50 and inhibits rotation of the handwheel 50 when the security lock 6 is locked.

When the lever 52 is unfolded and the handwheel 50 is rotated in clockwise manner, the pinion drive 441 acts on the gear rack 440 counter to the spring force of spring 442 as shown in Fig. 4. A plunger or a similar element is pulled downwards releasing the locking mechanism and enabling the plug tower 310 to be pulled downwards and to release the trailer coupling 1.

An element of the locking mechanism or a further release mechanism may be provided in the trailer coupling to be connected to a central control of a motor vehicle. An initial command from a central control may, for example, be required to release such an element in order to operate the user interface 5 (handwheel 50).

It is understood that features may be varied, for example, in shape or position, without departing from the scope of the claims. For example, an actuation mechanism has been shown in a preferred embodiment but may basically be chosen according to a user's need. Yet further, a handwheel may be provided on either side of a coupling arm 3. Accordingly, a direction of rotation of the handwheel 50 is clockwise or counter-clockwise.

## Claims

1. Trailer coupling (1) for vehicles, the trailer coupling (1) comprising
a coupling arm (3) with a coupling head (300) arranged at a free end (30) of the coupling arm (3) for coupling a trailer to a vehicle, and
an opposite end (31) of the coupling arm (3) being attachable to a mounting structure, which mounting structure (4) is arrangeable at the vehicle;
a locking mechanism comprising a locking arrangement for releasably locking the coupling arm (3) to the mounting structure (4); and
a user interface (5) for actuating the locking mechanism, wherein the user interface (5) comprises an extendable lever (52),
**characterized in that** the user interface (5) is a handwheel (50) accommodating the extendable lever (52).

2. Trailer coupling according to claim 1, wherein the extendable lever (52) is a foldable lever or a slidable lever.

3. Trailer coupling according to any one of the preceding claims, wherein the extendable lever (52) comprises a return device (55) holding the extendable lever (52) in a non-extended position.

4. Trailer coupling according to any one of the preceding claims, wherein the handwheel (50) comprises a security lock (6) to secure the handwheel (50) in a locked position.

5. Trailer coupling according to claim 4, wherein the security lock (6) prevents at least a movement of the extendable lever (52), a movement of the handwheel (50), movement of parts of the locking mechanism or a movement of parts of an actuation mechanism for the locking mechanism.

6. Trailer coupling according to any one of the preceding claims, further comprising an end stop for the extendable lever (52) hindering or preventing movement of the handwheel (50).

7. Trailer coupling according to claim 6, wherein the end stop comprises a protrusion (41) external of the handwheel (50).

8. Trailer coupling according to any one of claims 6 or 7, wherein the end stop is arranged such that the extendable lever (52) in the extended position may bypass the end stop.

9. Trailer coupling according to any one of the preceding claims, further comprising a rack and pinion drive (440, 441) acting on the locking arrangement.

10. Method for operating a trailer coupling (1) according to any one of the preceding claims, the method comprising:
providing a trailer coupling comprising a mounting structure (4) attachable to a vehicle and comprising a user interface (5) comprising an extendable lever (52), wherein the user interface (5) is a handwheel (50) accommodating the extendable lever (52);
extending the extendable lever (52) to an extended position;
moving the handwheel (50) by acting on the extendable lever (52) in the extended position, thereby releasing a locking mechanism locking one end (31) of a coupling arm (3) of the trailer coupling (1), which end (31) is coupled to the mounting structure (4), thereby allowing the coupling arm (3) to be detached from the mounting structure (4).

11. Method according to claim 10, wherein extending the extendable lever (52) is performed by a rotational movement or by a linear movement or by a combination of a rotational and a linear movement.

12. Method according to any one of claims 10 or 11, further comprising blocking a movement of the handwheel (50) by providing an end stop for the extendable lever (52) in a non-extended position.

13. Method according to claim 12, further comprising extending the extendable lever (52) to the extended position thereby bypassing the end stop and allowing movement of the handwheel (50).

14. Method according to any one of claims 11 to 13, providing a force acting on the extendable lever (52) in the extended position to force the extendable lever (52) back into a non-extended position.

## Patentansprüche

1. Anhängerkupplung (1) für Fahrzeuge, die Anhängerkupplung (1) umfassend einen Kupplungsarm (3) mit einem Kupplungskopf (300), der an einem freien Ende (30) des Kupplungsarms (3) angeordnet ist zum Ankuppeln eines Anhängers an ein Fahrzeug, und wobei ein gegenüberliegendes Ende (31) des Kupplungsarms (3) an einer Befestigungsstruktur anbringbar ist, wobei die Befestigungsstruktur (4) am Fahrzeug anordenbar ist;
einen Verriegelungsmechanismus, der eine Verriegelungsanordnung zum lösbaren Verriegeln des Kupplungsarms (3) an der Befestigungsstruktur (4) umfasst, und
eine Benutzerschnittstelle (5) zum Betätigen des Verriegelungsmechanismus, wobei die Benutzerschnittstelle (5) einen ausfahrbaren Hebel (52) umfasst,
**dadurch gekennzeichnet, dass** die Benutzerschnittstelle (5) ein Handrad (50) ist, das den ausfahrbaren Hebel (52) aufnimmt.

2. Anhängerkupplung nach Anspruch 1, wobei der ausfahrbare Hebel (52) ein klappbarer Hebel oder ein schiebbarer Hebel ist.

3. Anhängerkupplung nach einem der vorangehenden Ansprüche, wobei der ausfahrbare Hebel (52) eine Rückstellvorrichtung (55) umfasst, die den ausfahrbaren Hebel (52) in einer nicht-ausgefahrenen Position hält.

4. Anhängerkupplung nach einem der vorangehenden Ansprüche, wobei das Handrad (50) eine Sicherheitsverriegelung (6) umfasst, um das Handrad (50) in einer verriegelten Position zu sichern.

5. Anhängerkupplung nach Anspruch 4, wobei die Sicherheitsverriegelung (6) zumindest eine Bewegung des ausfahrbaren Hebels (52), eine Bewegung des Handrads (50), Bewegung von Teilen des Verriegelungsmechanismus oder eine Bewegung von Teilen eines Betätigungsmechanismus für den Verriegelungsmechanismus verhindert.

6. Anhängerkupplung nach einem der vorangehenden Ansprüche, die ferner einen Endanschlag für den ausfahrbaren Hebel (52) umfasst, der eine Bewegung des Handrads (50) behindert oder verhindert.

7. Anhängerkupplung nach Anspruch 6, wobei der Endanschlag einen Vorsprung (41) ausserhalb des Handrads (50) umfasst.

8. Anhängerkupplung nach einem der Ansprüche 6 oder 7, wobei der Endanschlag so angeordnet ist, dass der ausfahrbare Hebel (52) in der ausgefahrenen Position den Endanschlag umgehen kann.

9. Anhängerkupplung nach einem der vorangehenden Ansprüche, die ferner einen auf die Verriegelungsanordnung wirkenden Zahnstangenantrieb (440, 441) umfasst.

10. Verfahren zum Bedienen einer Anhängerkupplung (1) nach einem der vorangehenden Ansprüche, das Verfahren umfassend:
Bereitstellen einer Anhängerkupplung, die eine an einem Fahrzeug anbringbare Befestigungsstruktur (4) und eine Benutzerschnittstelle (5) mit einem ausfahrbaren Hebel (52) umfasst, wobei die Benutzerschnittstelle (5) ein Handrad (50) ist, das den ausfahrbaren Hebel (52) aufnimmt;
Ausfahren des ausfahrbaren Hebels (52) in eine ausgefahrene Position;
Bewegen des Handrads (50) durch Einwirken auf den ausfahrbaren Hebel (52) in der ausgefahrenen Position, wodurch ein Verriegelungsmechanismus gelöst wird, der ein Ende (31) eines Kupplungsarms (3) der Anhängerkupplung (1) verriegelt, welches Ende (31) mit der Befestigungsstruktur (4) verbunden ist, wodurch der Kupplungsarm (3) von der Befestigungsstruktur (4) abgelöst werden kann.

11. Verfahren nach Anspruch 10, wobei das Ausfahren des ausfahrbaren Hebels (52) durch eine Drehbewegung oder durch eine lineare Bewegung oder durch eine Kombination aus einer Drehbewegung und einer linearen Bewegung durchgeführt wird.

12. Verfahren nach einem der Ansprüche 10 oder 11, weiterhin umfassend das Blockieren einer Bewegung des Handrads (50) durch Vorsehen eines Endanschlags für den ausfahrbaren Hebel (52) in einer nicht ausgefahrenen Position.

13. Verfahren nach Anspruch 12, weiterhin umfassend das Ausfahren des ausfahrbaren Hebels (52) in die ausgefahrene Position, wodurch der Endanschlag umgangen und eine Bewegung des Handrads (50) ermöglicht wird.

14. Verfahren nach einem der Ansprüche 11 bis 13, wobei eine Kraft bereitgestellt wird, die auf den ausfahrbaren Hebel (52) in der ausgefahrenen Position wirkt, um den ausfahrbaren Hebel (52) zurück in eine nichtausgefahrene Position zu forcieren.

## Revendications

1. Attelage de remorque (1) pour véhicules, l'attelage de remorque (1) comprenant:
un bras d'accouplement (3) comportant une tête d'accouplement (300) placée à une extrémité libre (30) du bras d'accouplement (3) pour accoupler une remorque à un véhicule, et
une extrémité opposée (31) du bras d'accouplement (3) pouvant être attachée à une structure de montage, laquelle structure de montage (4) peut être disposée sur le véhicule;
un mécanisme de blocage comprenant un agencement de blocage pour bloquer de façon amovible le bras d'accouplement (3) sur la structure de montage (4); et
une interface utilisateur (5) pour actionner le mécanisme de blocage, l'interface utilisateur (5) comprenant un levier extensible (52),
**caractérisé en ce que** l'interface utilisateur (5) est un volant de manœuvre (50) qui comporte le levier extensible (52).

2. Attelage de remorque selon la revendication 1, dans lequel le levier extensible (52) est un levier rabattable ou un levier coulissant.

3. Attelage de remorque selon l'une quelconque des revendications précédentes, dans lequel le levier extensible (52) comprend un dispositif de rappel (55) maintenant le levier extensible (52) dans une position non étendue.

4. Attelage de remorque selon l'une quelconque des revendications précédentes, dans lequel le volant de manœuvre (50) comprend un verrou de sûreté (6) pour immobiliser le volant de manœuvre (50) dans une position bloquée.

5. Attelage de remorque selon la revendication 4, dans lequel le verrou de sûreté (6) empêche au moins un mouvement du levier extensible (52), un mouvement du volant de manœuvre (50), le mouvement de parties du mécanisme de blocage ou un mouvement des parties d'un mécanisme d'actionnement pour le mécanisme de blocage.

6. Attelage de remorque selon l'une quelconque des revendications précédentes, comprenant en outre une butée pour le levier extensible (52) entravant ou empêchant le mouvement du volant de manœuvre (50).

7. Attelage de remorque selon la revendication 6, dans lequel la butée comprend une protubérance (41) extérieure au volant de manœuvre (50).

8. Attelage de remorque selon l'une quelconque des revendications 6 et 7, dans lequel la butée est agencée de telle manière que le levier extensible (52) dans la position étendue peut contourner la butée.

9. Attelage de remorque selon l'une quelconque des revendications précédentes, comprenant en outre un engrenage à crémaillère (440, 441) agissant sur l'agencement de blocage.

10. Procédé pour mettre en œuvre un attelage de remorque (1) selon l'une quelconque des revendications précédentes, le procédé comprenant les étapes suivantes:
fournir un attelage de remorque comprenant une structure de montage (4) pouvant être attachée à un véhicule et comprenant une interface utilisateur (5) comprenant un levier extensible (52), l'interface utilisateur (5) étant un volant de manœuvre (50) qui comporte le levier extensible (52);
déployer le levier extensible (52) jusqu'à une position étendue;
déplacer le volant de manœuvre (50) en agissant sur le levier extensible (52) dans la position étendue, libérant ainsi un mécanisme de blocage bloquant une extrémité (31) d'un bras d'accouplement (3) de l'attelage de remorque (1), laquelle extrémité (31) est accouplée à la structure de montage (4), permettant ainsi au bras d'accouplement (3) d'être détaché de la structure de montage (4).

11. Procédé selon la revendication 10, dans lequel la mise en extension du levier extensible (52) est réalisée par un mouvement rotatif ou par un mouvement linéaire ou par une combinaison d'un mouvement rotatif et d'un mouvement linéaire.

12. Procédé selon l'une quelconque des revendications 10 et 11, comprenant en outre le fait de bloquer un mouvement du volant de manœuvre (50) en fournissant une butée pour le levier extensible (52) dans une position non étendue.

13. Procédé selon la revendication 12, comprenant en outre le fait d'étendre le levier extensible (52) jusqu'à la position étendue en contournant de ce fait la butée et permettant le mouvement du volant de manœuvre (50).

14. Procédé selon l'une quelconque des revendications 11 à 13, fournissant une force agissant sur le levier extensible (52) dans la position étendue pour forcer le levier extensible (52) à revenir dans une position non étendue.
